# FASCICULE DE BREVET EUROPEEN

(11) **EP 3 458 434 B1**
(45) Date de publication et mention de la délivrance du brevet: **24.07.2024**
(21) Numéro de dépôt: 17729518.5
(22) Date de dépôt: 18.05.2017
(51) Int. Cl.: C05D 9/02

(54) **UTILISATION DU SILICIUM COMME STIMULANT DE L'ABSORPTION DU FER CHEZ UNE PLANTE**
VERWENDUNG VON SILICIUM ALS STIMULANS ZUR EISENABSORPTION IN EINER PFLANZE
USE OF SILICON AS A STIMULANT FOR IRON ABSORPTION IN A PLANT

(30) Priorité: 19.05.2016 FR 1654442
(43) Date de publication de la demande: 27.03.2019
(73) Titulaire: Agro Innovation International, 35400 Saint-Malo (FR)
(72) Inventeur: YVIN, Jean-Claude, 35400 Saint-Malo (FR); ARKOUN, Mustapha, 35430 Saint Jouan Des Guérets (FR)
(74) Mandataire: Cabinet Beau de Loménie
(86) Numéro de dépôt international: PCT/FR2017/051208
(87) Numéro de publication internationale: WO 2017/198957

(56) Documents cités:
- WO-A1-2010/001184
- WO-A1-2010/040176
- WO-A1-2014/185794
- WO-A2-2010/006233
- DATABASE BIOSIS [online] BIOSCIENCES INFORMATION SERVICE, PHILADELPHIA, PA, US; June 2013 (2013-06-01), PAVLOVIC JELENA ET AL: "Silicon alleviates iron deficiency in cucumber by promoting mobilization of iron in the root apoplast", Database accession no. PREV201300426406
- NEW PHYTOLOGIST, vol. 198, no. 4, June 2013 (2013-06-01), pages 1096 - 1107, ISSN: 0028-646X(print), DOI: 10.1111/NPH.12213
- DATABASE BIOSIS [online] BIOSCIENCES INFORMATION SERVICE, PHILADELPHIA, PA, US; August 2013 (2013-08-01), PAVLOVIC J ET AL: "Silicon alleviates iron deficiency in cucumber by promoting mobilization of iron in the root apoplast (vol 198, pg 1096, 2013)", Database accession no. PREV201300560435
- NEW PHYTOLOGIST, vol. 199, no. 3, August 2013 (2013-08-01), pages 866, ISSN: 0028-646X(print), DOI: 10.1111/NPH.12384
- PAVLOVIC J ET AL: "Silicon alleviates iron deficiency in cucumber by promoting mobilization of iron in the root apoplast", NEW PHYTOLOGIST, vol. 198, no. 4, June 2013 (2013-06-01), pages 1096 - 1107, XP002766235, ISSN: 0028-646X, DOI: 10.1111/nph.12213
- LOURDES HERNANDEZ-APAOLAZA: "Can silicon partially alleviate micronutrient deficiency in plants? a review", PLANTA., vol. 240, no. 3, 11 July 2014 (2014-07-11), DE, pages 447 - 458, XP055337871, ISSN: 0032-0935, DOI: 10.1007/s00425-014-2119-x
- GONZALO MARÍA JOSÉ ET AL: "Effect of silicon addition on soybean (Glycine max) and cucumber (Cucumis sativus) plants grown under iron deficiency", PLANT PHYSIOLOGY AND BIOCHEMISTRY, vol. 70, 22 June 2013 (2013-06-22), pages 455 - 461, XP028682955, ISSN: 0981-9428, DOI: 10.1016/J.PLAPHY.2013.06.007

## Description

### Domaine technique

L'invention concerne une nouvelle utilisation du silicium pour stimuler l'absorption du fer chez une plante.

### Arrière-plan technologique

Les plantes doivent assimiler des éléments nutritifs pour leur assurer une croissance normale. En particulier, les plantes ont besoin d'assimiler des constituants essentiels pour la synthèse des protéines, comme le fer. La plupart des plantes s'alimentent dans le sol en fer et utilisent cet élément pour la synthèse des protéines via des mécanismes d'absorption et de synthèse plus ou moins complexes. Ainsi, le fer joue un rôle déterminant pour les cultures, à la fois sur le rendement et sur la qualité des productions. Il est donc indispensable de fournir aux plantes du fer en quantité suffisante et sous une forme facilement assimilable par la plante.

Le fer est un élément essentiel à la synthèse de chlorophylle. La chlorophylle est nécessaire à la photosynthèse et donne sa couleur verte aux plantes. Une carence en fer, parfois appelée chlorose ferrique, est à l'origine d'une altération de l'activité photosynthétique de la plante et diminue la quantité de chlorophylle synthétisée. Une réduction de la quantité de chlorophylle réduit la croissance de la plante et sa résistance aux stress. Elle devient plus sensible aux changements de température ou aux maladies. Les plantes qui présentent une carence en fer présentent notamment une décoloration du feuillage qui devient jaunâtre en commençant par les jeunes pousses, jusqu'à la nécrose des feuilles.

Les carences en fer peuvent affecter un très grand nombre de plantes. Les plantes cultivées sur des sols calcaires sont particulièrement sujettes à des carences en fer. L'excès d'eau causé par des précipitations élevées ou un mauvais drainage sont également susceptibles d'entraîner des carences en fer.

Bien qu'abondant dans le sol, l'absorption du fer par les racines est complexe car dans des conditions oxydantes ou de pH alcalin, le cation Fe⁺⁺ (fer ferreux) disparait car il est transformé en oxyde ferrique (Fe⁺⁺⁺) inassimilable par la plante.

Les plantes ont développé des stratégies spécifiques pour leur permettre d'absorber le fer :
- la stratégie 1 dans laquelle le fer est absorbé directement sous la forme de fer ferreux (Fe⁺⁺) c'est le cas par exemple chez la tomate, le pois ou arabidopsis ; et
- la stratégie 2 où la plante (par exemple chez le maïs, l'orge ou le riz) va produire et libérer dans la rhizosphère des molécules naturelles ou phytosidérophores qui vont se lier au fer de type fer ferrique (Fe⁺⁺⁺) et permettre son assimilation.

Afin de prévenir les carences en fer, la plante peut être supplémentée avec une source de fer, notamment par l'apport de compositions fertilisantes comprenant une source de fer. Les compositions fertilisantes généralement utilisées permettent d'apporter la quantité suffisante de fer pour que la plante puisse assurer une croissance normale.

Les fertilisants à base de fer sont de deux types : les compositions fertilisantes à base de fer non chélaté et les compositions fertilisantes à base de fer chélaté.

Les compositions fertilisantes à base de fer non chélaté, comme le sulfate de fer heptahydraté, ont tendance à réagir avec les carbonates contenus dans le sol et à perdre leur efficacité. De plus, les ions Fe(II) contenus dans l'engrais peuvent facilement s'oxyder en Fe(III), forme qui est moins assimilable par la plante que le Fe(II). Les compositions fertilisantes à base de fer non chélaté sont donc instables et leur efficacité est variable.

Les compositions fertilisantes à base de fer chélaté constituent la forme la mieux assimilable par la plante. Le fer chélaté est plus stable : il est notamment disponible plus longtemps par rapport au fer non chélaté. Les agents chélatants utilisés dans les compositions fertilisantes incluent par exemple l'EDDHA, l'EDTA, le DTPA, l'EDDHSA, l'EDDHMA et/ou les matières organiques du sol, par exemple de type humate ou citrate. Ces agents chélatants sont néanmoins onéreux et les compositions fertilisantes qui en contiennent représentent un coût non négligeable pour l'agriculteur. Ce coût est d'autant plus important que plusieurs applications sont généralement nécessaires pour prévenir le risque de carence en fer. En effet, les fer chélatés sont solubles dans l'eau et peuvent être facilement emportés par l'eau (phénomène de lessivage). Il est donc nécessaire de renouveler régulièrement l'application de composition fertilisante à base de fer chélaté.

Il est également essentiel que la plante puisse assimiler correctement les éléments nutritifs présents dans leur environnement, notamment le fer présent dans les compositions fertilisantes ou naturellement présent dans le sol. Ainsi, une plante capable d'assimiler une quantité plus importante de fer sera moins sensible aux risques de carence et va croître plus rapidement. Ainsi, les quantités de fer dans les compositions fertilisantes peuvent être diminuées, ce qui peut (i) présenter un gain financier substantiel lors des campagnes de fertilisation et (ii) permettre de diminuer les pertes de fer par lessivage ou par blocage dans le sol, et ainsi de diminuer l'impact des campagnes de fertilisation sur l'environnement. PAVLOVIC J ET AL: "Silicon alleviates iron deficiency in cucumber by promoting mobilization of iron in the root apoplast",NEW PHYTOLOGIST, vol. 198, no. 4, pages 1096-1107, divulgue l'augmentation de l'absorption de fer chez le concombre lorsque du silicium sous forme de Si(OH)₄ est mis en contact avec les plantes.

LOURDES HERNANDEZ-APAOLAZA: "Can silicon partially alleviate micronutrient deficiency in plants? a review",PLANTA., vol. 240, no. 3, pages 447-458, divulgue que la présence de silicium peut affecter de manière positive l'absorption du fer chez certaines plantes.

GONZALO MARÍA JOSÉ ET AL: "Effect of silicon addition on soybean (Glycine max) and cucumber (Cucumis sativus) plants grown under iron deficiency",PLANT PHYSIOLOGY AND BIOCHEMISTRY, vol. 70, 22, pages 455-461, divulgue que la présence de silicium stimule l'absorption de fer chez le concombre et le soja lorsque celui ci est administré sous forme de chelate de fer et le silicium sous forme de silicate de sodium.

Il existe donc un besoin de mettre au point des traitements permettant de stimuler l'absorption du fer chez la plante qui n'est pas en carence en fer.

C'est dans ce contexte que le demandeur a mis en évidence, et ceci constitue le fondement de la présente invention, que le silicium permet de stimuler l'absorption du fer chez une plante.

### Résumé de l'invention

Ainsi, la présente invention, qui trouve application dans le domaine agricole, vise à proposer une nouvelle utilisation du silicium comme stimulant de l'absorption du fer chez une plante.

L'invention concerne un procédé pour stimuler l'absorption du fer chez une plante, caractérisé en ce qu'il comprend l'apport à ladite plante ou aux sols d'une quantité efficace de silicium.

### Description détaillée de l'invention

La présente invention découle des avantages surprenants mis en évidence par les inventeurs de l'effet stimulant du silicium sur l'absorption du fer chez une plante.

Dans le cadre de la présente invention, on entend designer par l'expression "plante" la plante considérée dans son ensemble, incluant son appareil racinaire, son appareil végétatif, les graines, les semences et les fruits.

L'utilisation du silicium permet une augmentation accrue (i.e. une stimulation) de l'absorption du fer. Cette stimulation de l'absorption permet d'améliorer la santé de la plante, répondant ainsi aux besoins de croissance de la culture qui s'exprimera notamment en termes d'amélioration de rendement et de la qualité de la récolte a. L'utilisation du silicium selon l'invention permet également d'améliorer l'efficacité de la fertilisation en diminuant les quantités de fer utilisées dans les compositions fertilisantes.

Dans le cadre de la présente description, on entend désigner par l'expression « composition fertilisante » tout produit dont l'emploi est destiné à assurer ou à améliorer les propriétés physiques, chimiques ou biologiques des sols ainsi que la nutrition des végétaux. Une telle composition peut être, par exemple, un engrais appliqué par voie racinaire ou par voie foliaire. On sait que les engrais se définissent comme des matières fertilisantes dont la fonction principale est d'apporter aux plantes des éléments nutritifs (éléments fertilisants majeurs, éléments fertilisants secondaires et oligo-éléments). L'application répétée d'engrais à base de fer pour pallier les pertes par lessivage peut représenter pour l'agriculteur une perte financière substantielle. Une des réponses possibles pour réduire la fréquence d'application des engrais à base de fer consiste à améliorer l'efficacité de l'absorption du fer par les plantes. Cela constitue l'un des principaux avantages de la présente invention qui découle directement de la stimulation de l'absorption du fer.

Au sens de l'invention, on entend par « silicium » l'élément chimique de symbole Si sous toutes ses formes. Cela comprend notamment la silice (également connue sous le terme « oxyde de silicium »), les silicates (e.g. SiO₃²⁻ et SiO₄⁴⁻) et les silicates combinés. La silice existe à l'état libre sous formes cristallines ou amorphes. Sous sa forme cristalline, la silice se présente sous forme de cristaux non-moléculaires formés de motifs tétraédriques SiO₄ liés entre eux par les atomes d'oxygène de façon régulière, comme dans le quartz. Sous sa forme amorphe, la silice se présente sous forme de dioxyde de silice (SiO₂), comme dans le verre. La silice est un oxyde acide qui réagit avec les oxydes basiques pour donner les silicates, notamment SiO₃²⁻ et SiO₄⁴⁻. Les silicates sont capables de se combiner à d'autres atomes métalliques, comme par exemple l'aluminium (Al), le fer (Fe), le Magnésium (Mg), le calcium (Ca), le sodium (Na), le potassium (K). Les silicates combinés ainsi obtenus sont respectivement le silicate d'aluminium (Al₂SiO₃), le silicate de fer (Fe₂SiO₃), le silicate de magnésium (Mg₂SiO₃), le silicate de calcium (Ca₂SiO₃), le silicate de sodium (Na₂SiO₃) et le silicate de potassium (K₂SiO₃).

Dans un mode de réalisation particulier, le silicium est apporté à la plante sous forme de silicate de sodium (Na₂SiO₃), de silicate de potassium (K₂SiO₃), et/ou de leurs dérivés. Les dérivés comprennent par exemple les formes K₂SiO₄ et Na₂SiO₄.

Avantageusement, le silicium apporté à la plante peut provenir de différentes sources, par exemple de silice minérale solide (i.e. terre de diatomée ou sable), de silice minérale liquide (i.e. l'acide orthosilicique, Si(OH)₄), de produits vitreux à base de silicium (e.g. poudres ou fibres de verres), et/ou de silice organique.

Les diatomées sont des micro-algues marines qui sécrètent un squelette siliceux que l'on retrouve dans des carrières naturelles sous forme fossilisée. La terre de diatomée est généralement extraite de ces carrières naturelles riches en diatomées fossilisées. La terre de diatomée est essentiellement constituée de dioxyde de silicium (SiO₂).

Par produits vitreux à base de silicium, on entend toute matière vitreuse pulvérulente comprenant (i) un ou plusieurs éléments minéraux, notamment un ou plusieurs éléments minéraux sélectionnés parmi le potassium (K), le phosphore (P), le calcium (Ca), le magnésium (Mg), le soufre (S), le fer (Fe), le bore (B), le manganèse (Mn), le cuivre (Cu) et le molybdène (Mo) et (ii) du silicium. Les éléments minéraux sont préférentiellement sous forme d'oxydes.

La silice organique correspond au silanol (CH₃Si(OH)₃). La silice organique peut notamment provenir de résidus de culture riches en silicium, par exemple les plantes accumulatrices de silicium comme la canne à sucre, le riz, le bambou, le sorgho, le maïs, le blé, la prairie.

Chez la plante, le silicium est généralement transporté suivant le flux transpiratoire des racines vers les organes aériens où il est accumulé et précipite pour former des opales biogéniques, appelées phytolithes. L'accumulation de silicium est plus ou moins importante selon la variété de plante. Dans un mode de réalisation particulier, la plante est une plante accumulatrice de silicium.

Au sens de l'invention, on entend par « plante accumulatrice de silicium », une plante qui contient plus de 1% de Si (exprimé en poids de la masse sèche de la plante) et un ratio molaire Si/Ca > 1. Les plantes accumulatrices de silicium comprennent notamment les bryophytes, les graminées, les cypéracées et les musacées.

Les plantes considérées comme non accumulatrices sont celles contenant moins de 0,5% de silicium (exprimé en poids de la masse sèche de la plante). Les plantes non accumulatrices de silicium comprennent notamment les gymnospermes et les dicotylédones.

Dans un mode de réalisation particulier, la plante est choisie parmi le riz, le blé, l'avoine, la canne à sucre, l'orge, le soja, le maïs, de préférence le riz.

Selon l'invention, la plante n'est pas en condition de carence en fer. Ainsi, le silicium permet de stimuler l'absorption de fer alors que la plante dispose d'une quantité suffisante de fer dans le sol.

Au sens de l'invention, on entend par « stimulant de l'absorption » une augmentation accrue de l'absorption, et/ou une amélioration des mécanismes d'absorption. La présente invention concerne donc l'utilisation du silicium comme stimulant des mécanismes d'absorption du fer chez une plante. La présente invention concerne également l'utilisation du silicium pour augmenter l'absorption du fer chez une plante.

Au sens de l'invention, on entend par « absorption du fer » une absorption du fer présent dans le sol. Le fer présent dans le sol est ainsi absorbé chez la plante au niveau des racines. Avantageusement, le fer est soit absorbé sous forme de fer ferreux (Fe⁺⁺) de préférence pour les plantes à stratégie 1 (par exemple chez la tomate, le pois ou arabidopsis), soit sous forme de complexe Fe⁺⁺⁺-sidérophore pour les plantes à stratégie 2 (par exemple chez le maïs, l'orge ou le riz) .

Dans un mode de réalisation particulier, le sol est à un pH acide ou neutre. L'absorption du fer dans un sol acide ou neutre est particulièrement avantageuse car le cation Fe⁺⁺, forme assimilable par la plante, n'est pas ou très peu oxydé.

Dans le cadre de la présente invention, une quantité efficace de silicium est apportée à la plante pour stimuler l'absorption du fer. Ainsi, le silicium est apporté à la plante dans une quantité efficace pour augmenter l'absorption du fer par la plante d'au moins 10%, au moins 15%, au moins 20%, au moins 25%, au moins 30%, avantageusement d'au moins 30%, au moins 35%, au moins 40%, au moins 45%, avantageusement d'au moins 50%, au moins 55%. En d'autres termes, le silicium apporté à la plante permet d'augmenter la teneur en fer dans la plante d'au moins 10%, au moins 15%, au moins 20%, au moins 25%, au moins 30%, avantageusement d'au moins 30%, au moins 35%, au moins 40%, au moins 45%, avantageusement d'au moins 50%, au moins 55%.

L'augmentation de l'absorption se mesure en déterminant la teneur en fer dans la plante. Le terme « augmentation » s'entend par rapport à la plante avant l'apport en silicium, par exemple par rapport à la plante n'ayant reçu aucun apport en silicium. La « teneur » en fer s'exprime en w/w de masse sèche, ce qui correspond à la masse en fer contenu dans un échantillon de plante séché. La mesure de la teneur en fer est réalisée par une méthode d'analyse appropriée.

Le silicium peut être apporté à la plante par voie racinaire ou par voie foliaire. Dans un mode de réalisation particulier, le silicium est apporté à la plante :
- soit sous forme liquide dans des solutions nutritives racinaires, par exemple en une quantité allant de 0.5 à 5 g/L, et de préférence de l'ordre de 1 g/L
- soit sous forme liquide dans des solutions nutritives foliaires, par exemple en une quantité allant de 10 à 50 g/L, et de préférence de l'ordre de 30 g/L
- soit sous forme solide, par exemple dans des engrais pulvérulents ou granulés, par exemple en une quantité allant de 10 à 100 kg/Tonne (T) et de préférence de l'ordre de 50 kg/Tonne (T).

Le silicium est apporté à la plante en une quantité allant de 2 kg/ha (kilogrammes/hectare) à 1000 kg/ha. Le silicium est avantageusement répandu de façon homogène sur un champ ou une culture de plantes.

Le silicium peut ainsi être utilisé en complément dans des compositions fertilisantes, telles que des engrais, comme stimulant de l'absorption du fer chez une plante. Le silicium peut être associé à d'autres substances fertilisantes classiquement utilisés dans les compositions fertilisantes. Une quantité efficace de silicium est utilisée dans une composition fertilisante en association avec une ou plusieurs substances fertilisantes. Les substances fertilisantes susceptibles d'être utilisées en association avec le silicium peuvent être de natures variées et choisies par exemple parmi l'urée, le sulfate d'ammonium, le nitrate d'ammonium, le phosphate naturel, le chlorure de potassium, le sulfate d'ammonium, le nitrate de magnésium, le nitrate de manganèse, le nitrate de zinc, le nitrate de cuivre, l'acide phosphorique, l'acide borique, le sulfate de fer, les complexes de fer chélaté. Avantageusement, la substance fertilisante utilisée en association avec le silicium est choisie parmi l'urée, le sulfate d'ammonium, le nitrate d'ammonium, la solution azotée et/ou le nitre de potassium.

L'invention vise un procédé pour stimuler l'absorption du fer chez une plante, caractérisé en ce qu'il comprend l'apport à ladite plante ou aux sols, d'une quantité efficace de silicium.

Le silicium peut être apporté à la plante par voie racinaire ou par voie foliaire. Dans un mode de réalisation particulier, le silicium est apporté à la plante :
- soit sous forme liquide dans des solutions nutritives racinaires, par exemple en une quantité allant de 0.5 à 5 g/L, et de préférence de l'ordre de 1 g/L
- soit sous forme liquide dans des solutions nutritives foliaires, par exemple en une quantité allant de 10 à 50 g/L, et de préférence de l'ordre de 30 g/L,
- soit sous forme solide, par exemple dans des engrais pulvérulents ou granulés, par exemple en une quantité allant de 10 à 100 kg/Tonne (T) et de préférence de l'ordre de 50 kg/Tonne (T).

Le silicium est apporté à la plante en une quantité allant de 2 kg/ha à 1000 kg/ha. Dans ce mode de réalisation, le silicium est avantageusement répandu de façon homogène sur un champ ou une culture de plantes.

Le procédé selon l'invention comprend en outre l'apport à ladite plante ou aux sols d'une quantité efficace de fer sous forme de « EDTA, 2NaFe, H₂O ». Les inventeurs se sont en effet aperçu que le fer sous forme de « EDTA, 2NaFe, H₂O » associé au silicium permettait de stimuler l'absorption du fer chez une plante de manière significative. L'apport de de « EDTA, 2NaFe, H₂O » peut se faire avant l'apport de silicium, après l'apport de silicium ou de façon concomitante à l'apport de silicium, de préférence de façon concomitante à l'apport de silicium.

La présente invention sera maintenant illustrée par les exemples non limitatifs suivants.

Dans ces exemples, et sauf indication contraire, les pourcentages sont exprimés en poids et la température est la température ambiante.

### Légende des figures

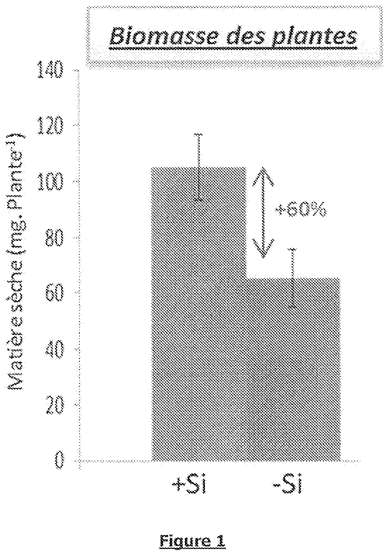

*Figure 1* : graphique qui représente la biomasse d'un plant de riz, *i.e.* la masse sèche d'un plant de riz, (i) avec une alimentation qui comprend du silicium (Na₂SiO₃), *i.e.* barre « +Si » et (ii) avec une alimentation qui ne comprend pas de silicium, *i.e.* barre « -Si ». Le graphique montre une augmentation de 60% de la biomasse des plantes dont l'alimentation comprend du silicium par rapport aux plantes dont l'alimentation ne comprend pas de silicium.

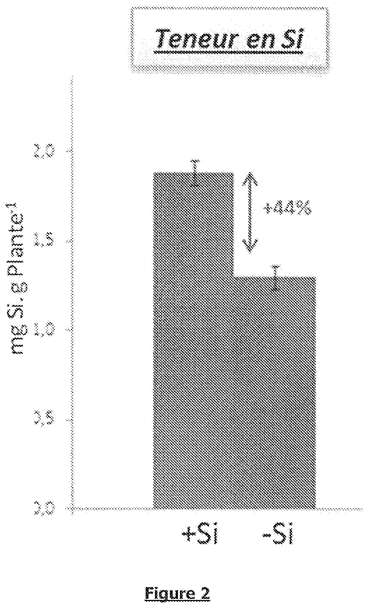

*Figure 2* *:* graphique qui représente la quantité de silicium dans un plant de riz (i) avec une alimentation qui comprend du silicium (Na₂SiO₃), *i.e.* barre « +Si » et (ii) avec une alimentation qui ne comprend pas de silicium, *i.e.* barre « -Si ». Le graphique montre une augmentation de 44% de la quantité de silicium dans les plantes dont l'alimentation comprend du silicium par rapport aux plantes dont l'alimentation ne comprend pas de silicium. Le graphique montre que le silicium est absorbé par la plante.

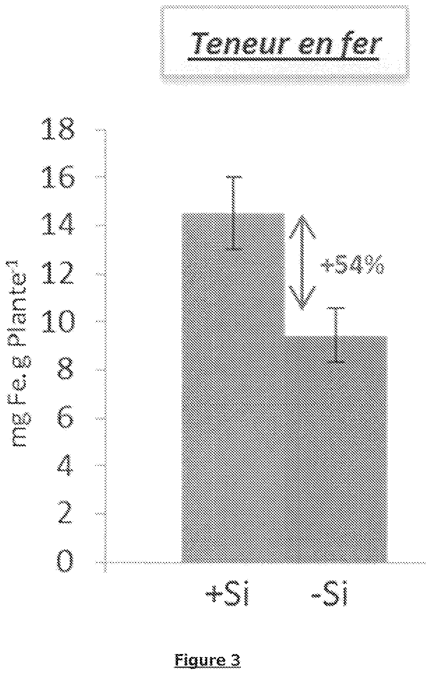

*Figure 3* : graphique qui représente la quantité de fer dans un plant de riz (i) avec une alimentation qui comprend du silicium (Na₂SiO₃), *i.e.* barre « +Si » et (ii) avec une alimentation qui ne comprend pas de silicium, *i.e.* barre « -Si ». Le graphique montre une augmentation de 54% de la quantité de fer dans les plantes dont l'alimentation comprend du silicium par rapport aux plantes dont l'alimentation ne comprend pas de silicium. Le graphique montre que le silicium stimule l'absorption du fer.

### Exemples

### Exemple 1 : Préparation du matériel végétal

Des graines de riz, *Oryza sativa L. Var ADRET*, ont été placées à 4°C la veille de leur mise en germination pour assurer une levée homogène. Elles ont ensuite été semées sur une couche de perlite dans des bacs contenant de l'eau déminéralisée et ont été laissées à l'obscurité pendant 10 jours, avant d'être mises à la lumière. Après 7 jours, les plantules ont été repiquées dans des bacs de 8L contenant une solution Hoagland (tableau 1).

**Tableau 1 : composition d'une solution Hoagland**

| **Macroéléments** | **[conc finale] mM** |
|---|---|
| **CO(NH₂)₂** | **1** |
| **KCl** | **0,1** |
| **CaCl₂** | **0,18** |
| **KH₂PO₄** | **0,3** |
| **MgSO₄, 7H₂O** | **0,27** |
| **EDTA, 2NaFe, H₂O** | **0,2** |

| **Microéléments** | **[conc finale] µM** |
|---|---|
| **H₃BO₃** | **9,4** |
| **MnSO₄, H₂O** | **6,7** |
| **CuSO₄, 5H₂O** | **0,16** |
| **ZnSO₄, 7H₂O** | **0,15** |
| **(NH₄)₆ Mo₇O₂₄, 4H₂O** | **0,015** |
| **CoCl₂, 6H₂O** | **0,1** |
| **NiCl₂** | **0,04** |

### Alimentation qui comprend du silicium (+Si)

Du silicium à 1,5 mM a été apporté aux plantules sous forme de silicate de sodium (Na₂SiO₃) qui a été neutralisé avec du HCl (1M, 30 ml pour 8L de solution nutritive Hoagland), afin de favoriser la formation du Si(OH)₄, selon le schéma réactionnel ci-dessous.

NaSiO₃ + 2HCL + H₂O → Si(OH)₄ + NaCL₂

Un changement de solution nutritive a été effectué tous les 2 jours et le pH a été ajusté entre 5,6 et 6. L'expérience a été menée dans une chambre de croissance à +22°C avec une photopériode de 12h/12h sous des lampes néons (lumilux cool daylight, 36 W). Les plantes ont été récoltées 14 jours après application des traitements.

Dans la solution nutritive Hoagland, le Fer est apporté sous forme de chélate de Fer. (EDTA ,2NaFe, H₂O) à la concentration finale de 0,2 mM

### Alimentation qui ne comprend pas de silicium (-Si)

La même expérience est réalisée en utilisant comme solution nutritive, la solution Hoagland, mais sans apport de Silicium. Un changement de solution nutritive a été effectué tous les 2 jours et le pH a été ajusté entre 5,6 et 6. L'expérience a été menée dans une chambre de croissance à +22°C avec une photopériode de 12h/12h sous des lampes néons (lumilux cool daylight, 36 W). Les plantes ont été récoltées 14 jours après application des traitements.

### Exemple 2 : Mesure des paramètres physiologiques de la plante

### 1. Détermination des biomasses foliaires et racinaires

Pour chacune des conditions de culture (+Si et -Si), quatre lots de trois plantes récoltées à l'Exemple 1 ont été constitués (1 lot de 3 plantes = 1 répétition biologique). Les parties aériennes (feuilles et tiges) et racinaires de chaque plante ont été séparées, pesées (biomasse fraîche) puis broyées finement dans de l'azote liquide. La mesure de la biomasse d'une plante entière est présentée dans la figure 1.

Conclusion : les plantes traitées avec du silicium présentent une augmentation significative de leur biomasse (+60%), ce qui traduit une meilleure croissance du plant de riz.

### 2. Analyses biochimiques

Pour chacune des répétitions biologiques, des échantillons de matière fraîche broyée (obtenus selon le point 1) ont été lyophilisés pendant 48h. Ces échantillons ont servi à la détermination de la matière sèche, à l'analyse du silicium (Si) et du fer par ICP-OES (Inductively Coupled Plasma - Optical Emission Spectroscopy).

L'ensemble des traitements ont été réalisés systématiquement pour chacune des répétitions biologiques, c'est à dire en quadruplât. Les données obtenues ont été présentées sous forme de moyenne et la variabilité des résultats a été donnée sous la forme de l'erreur standard de la moyenne pour n=4. Une analyse statistique des résultats a été réalisée en utilisant le test de Student.

### Dosage du silicium

La détermination du contenu des échantillons en silicium (Si) a été réalisée à l'aide d'un ICP-OES (Inductively Coupled Plasma-Optical Emission Spectroscopy, Thermo Elemental Co. Iris Intrepid II XDL). Elle a été précédée d'une digestion des échantillons lyophilisés pendant 48h par micro-ondes en milieu acide (8 mL d'acide nitrique concentré et 2 mL de peroxyde d'hydrogène pour 0,1g de matière sèche). Le dosage du silicium est présenté dans figure 2.

Conclusion : une partie du silicium utilisé est absorbé par la plante.

### Dosage du fer

La détermination du contenu des échantillons en fer (Fe) a été réalisée à l'aide d'un ICP-OES (Inductively Coupled Plasma-Optical Emission Spectroscopy, Thermo Elemental Co. Iris Intrepid II XDL). Elle a été précédée d'une digestion des échantillons lyophilisés pendant 48h par micro-ondes en milieu acide (8 mL d'acide nitrique concentré et 2 mL de peroxyde d'hydrogène pour 0,1g de matière sèche).

Le dosage du fer est présenté dans la figure 3.

Conclusion : les plantes traitées avec du silicium présentent une augmentation significative de leur teneur en Fer de +54%, ce qui traduit une meilleure assimilation du Fer par le plant de riz.

## Revendications

1. Procédé pour stimuler l'absorption du fer présent dans le sol chez une plante qui n'est pas en condition de carence en fer, **caractérisé en ce qu'**il comprend l'apport à ladite plante ou aux sols d'une quantité efficace de silicium,
**caractérisé en ce qu'**il comprend en outre l'apport à ladite plante ou aux sols d'une quantité efficace de fer sous forme de « EDTA, 2NaFe, H₂O ».

2. Procédé selon la revendication 1, **caractérisé en ce que** la plante est une plante accumulatrice de silicium.

3. Procédé selon la revendication 2, **caractérisé en ce que** la plante est choisie parmi le riz, le blé, l'avoine, la canne à sucre, l'orge, le soja et le maïs, de préférence le riz.

4. Procédé selon l'une des revendications 1 à 3, **caractérisé en ce que** l'apport à la plante est réalisée par voie racinaire ou par voie foliaire.

5. Procédé selon l'une des revendications 1 à 4, **caractérisé en ce que** le silicium est apporté à la plante :
- soit sous forme liquide dans des solutions nutritives racinaires, par exemple en une quantité comprise entre 0.5 et 5 g/L, et de préférence de l'ordre de 1 g/L
- soit sous forme liquide dans des solutions nutritives foliaires, par exemple en une quantité comprise entre 10 et 50 g/L, et de préférence de l'ordre de 30 g/L,
- soit sous forme solide, par exemple dans des engrais pulvérulents ou granulés, par exemple en une quantité allant de 10 à 100 kg/T et de préférence de l'ordre de 50 kg/T.

6. Procédé selon l'une quelconque des revendications 1 à 5, **caractérisé en ce que** l'apport de « EDTA, 2NaFe, H₂O » se fait avant l'apport de silicium, après l'apport de silicium ou de façon concomitante à l'apport de silicium.

7. Procédé selon l'une quelconque des revendications 1 à 6, **caractérisé en ce que** l'apport de « EDTA, 2NaFe, H₂O » se fait de façon concomitante à l'apport de silicium.

## Patentansprüche

1. Verfahren zum Stimulieren der Absorption von Eisen, das in dem Boden einer Pflanze vorhanden ist, die keinen Mangelzustand an Eisen aufweist, **dadurch gekennzeichnet, dass** es die Aufnahme einer wirksamen Menge an Silizium durch die Pflanze oder die Böden umfasst,
**dadurch gekennzeichnet, dass** es ferner die Aufnahme einer wirksamen Menge an Eisen in Form von "EDTA, 2NaFe, H₂O*"* durch die Pflanze oder die Böden umfasst.

2. Verfahren nach Anspruch 1, **dadurch gekennzeichnet, dass** die Pflanze eine Pflanze ist, die Silizium speichert.

3. Verfahren nach Anspruch 2, **dadurch gekennzeichnet, dass** die Pflanze aus Reis, Weizen, Hafer, Zuckerrohr, Gerste, Soja und Mais, vorzugsweise Reis, ausgewählt ist.

4. Verfahren nach einem der Ansprüche 1 bis 3, **dadurch gekennzeichnet, dass** die Aufnahme durch die Pflanze durch die Wurzeln oder durch die Blätter umgesetzt wird.

5. Verfahren nach einem der Ansprüche 1 bis 4, **dadurch gekennzeichnet, dass** das Silizium durch die Pflanze aufgenommen wird:
- entweder in flüssiger Form in Wurzelnährlösungen, zum Beispiel in einer Menge, die zwischen 0,5 und 5 g/l liegt, und bevorzugt in der Größenordnung von 1 g/l,
- oder in flüssiger Form in Blattnährlösungen, zum Beispiel in einer Menge, die zwischen 10 und 50 g/l liegt, und bevorzugt in der Größenordnung von 30 g/l,
- oder in fester Form, zum Beispiel in pulverisierten oder granulierten Düngemitteln, zum Beispiel in einer Menge zwischen 10 und 100 kg/T, und bevorzugt in der Größenordnung von 50 kg/T.

6. Verfahren nach einem der Ansprüche 1 bis 5, **dadurch gekennzeichnet, dass** die Aufnahme von "EDTA, 2NaFe, H₂O*"* vor der Aufnahme von Silizium, nach der Aufnahme von Silizium oder gleichzeitig mit der Aufnahme von Silizium erfolgt.

7. Verfahren nach einem der Ansprüche 1 bis 6, **dadurch gekennzeichnet, dass** die Aufnahme von "EDTA, 2NaFe, H₂O*"* gleichzeitig mit der Aufnahme von Silizium erfolgt.

## Claims

1. A method for stimulating absorption of iron present in the soil in a plant which is not in an iron-deficient condition, **characterized in that** it comprises supplying an effective quantity of silicon to said plant or to soils,
**characterized in that** it also comprises supplying an effective quantity of iron in the form of "EDTA, 2NaFe, H₂O*"* to said plant or to soils.

2. The method according to claim 1, **characterized in that** the plant is a silicon-accumulating plant.

3. The method as according to claim 2, **characterized in that** the plant is selected from rice, wheat, oats, sugar cane, barley, soya, and maize, preferably rice.

4. The method according to claims 1 to 3, **characterized in that** the plant is supplied via the roots or via the foliage.

5. The method according to claims 1 to 4, **characterized in that** the silicon is supplied to the plant:
- · either in liquid form in root nutrient solutions, for example in a quantity of 0.5 g/L to 5 g/L, and preferably of the order of 1 g/L;
- · or in liquid form in foliage nutrient solutions, for example in a quantity of 10 g/L to 50 g/L, and preferably of the order of 30 g/L;
- · or in solid form, for example in powdered or granulated fertilizers, for example in a quantity of 10 kg/t to 100 kg/t and preferably of the order of 50 kg/t.

6. The method according to claims 1 to 5, **characterized in that** the "EDTA, 2NaFe, H₂O" is supplied before the silicon supply, after the silicon supply or concomitantly with the silicon supply.

7. The method according to claims 1 to 6, **characterized in that** the "EDTA, 2NaFe, H₂O" is supplied concomitantly with the silicon supply.
